(19) Europäisches Patentamt

European Patent Office

Office européen des brevets

(11) **EP 1 266 866 A1**

(12) **EUROPEAN PATENT APPLICATION**

(43) Date of publication:
**18.12.2002 Bulletin 2002/51**

(51) Int Cl.⁷: **C02F 1/465**

(21) Application number: **02254083.5**

(22) Date of filing: **12.06.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **13.06.2001 KR 2001033091**<br><br>(71) Applicant: **Han, Moo Young**<br>**Yonin-city, Kyonnggi-do 449 846 (KR)** | (72) Inventor: **Han, Moo Young**<br>**Yonin-city, Kyonnggi-do 449 846 (KR)**<br><br>(74) Representative: **Bayliss, Geoffrey Cyril et al**<br>**BOULT WADE TENNANT,**<br>**Verulam Gardens**<br>**70 Gray's Inn Road**<br>**London WC1X 8BT (GB)** |

(54) **Apparatus for generating microbubbles with positive charge for electroflotation and method for treating wastewater and contaminated water by electroflotation using the apparatus**

(57)    Disclosed are an apparatus for generating microbubbles with positive charge for electrflotation and a method for treating contaminated water by electroflotation using the apparatus to remove substances causing turbidity from contaminated water. The apparatus includes a reaction vessel (11) filled with an aqueous solution which is wastewater to be treated, and a pair of thin metal plates arranged in the reaction vessel and supplied with a voltage externally. One thin plate (12) serves as a cathode externally supplied with a negative potential and adapted to generate hydrogen gas in accordance with an electrolysis performed in the aqueous solution by the supplied voltage, whereas the other thin plate (13) serves an anode externally supplied with a positive potential and adapted to elute positive charges therefrom, thereby positively charging the hydrogen gas generated at the cathode. The contaminated water treatment method can effectively remove negatively-charged substances causing turbidity contained in raw contaminated water, for example, inorganic particles and heavy metals in industrial wastewater, and various suspended organic and inorganic substances contained in livestock wastewater, lake water or seawater, using positively-charged microbubbles generated from the apparatus. It is unnecessary to use any separate air injection apparatus or any surface absorbent because hydrogen gas generated by an electrolysis is positively charged by metal cations eluted in the electrolysis.

Fig. 1

EP 1 266 866 A1

**Description**

The present invention relates to an apparatus for generating microbubbles used in water treatment and a method for treating wastewater and contaminated water using the apparatus. More particularly, the present invention relates to an apparatus for generating microbubbles with a positive charge for electroflotation and a method for treating contaminated water by electroflotation using the apparatus to remove turbidity-causing substances from contaminated water. For example, the present invention relates to a method for removing inorganic particles and heavy metals, from industrial wastewater, which are main causes of environmental contamination. Also, the present invention relates to a method for removing, from livestock wastewater, organic turbidity-causing substances, and nitrogen and phosphorus causing eutrophication. Additionally, the present invention relates to a method for removing algae from lake water and seawater where eutrophication proceeds.

Various water treatment methods have been proposed. For example, there are a coagulation-sedimentation method for removing inorganic particles and heavy metals from industrial wastewater, and a microbubble flotation method for removing suspended or precipitated particles from wastewater. Coagulation-sedimentation is a process for removing contaminants using chemicals. Dissolved air flotation (DAF) is a process for removing suspended or precipitated particles from wastewater using microbubbles. In this DAF process, microbubbles collide with particles in wastewater while rising in the wastewater, thereby causing those particles to rise to the surface where easy removal of particles may be achieved. This DAF process is mainly used to remove particles having a low specific gravity such as algae and flocks. Air flotation is also used to sort mineral particles using injection of air.

However, the conventional coagulation-sedimentation method is likely to cause secondary environmental contamination because it removes contaminated substances with chemicals.

In the DAF process, according to the inter-particle collision theory, major factors that affect the success/rate of particle removal by injected microbubbles include electrostatic characteristics and sizes of the particles. Electrostatic characteristics are known to be more important. Most particles in water are negatively charged, and microbubbles used in conventional methods for treating water are also negatively charged. Accordingly, there are problems in that the conventional methods are relatively inefficient while requiring excessive pretreatments because particles with negative charge repel microbubbles with negative charge.

In association with the floatation process, there is a method in which microbubbles with positive charge generated using a surface adsorbent are used in order to enhance the efficiency of the process. However, where the surface adsorbent is used in drinking water or natural water, the process has problems such as loss of safety and excessive treatment cost.

For the treatment of livestock wastewater, a biological treatment method has been generally used in which organic turbidity-causing substances are reacted with microorganisms so that they are decomposed. However, this biological treatment method has disadvantages in that it is necessary to perform the treatment for at least 3 days in order to achieve a removal rate of 60% or more, although the treatment time may depend on the used treatment mode, aerobic or anaerobic treatment, so that high treatment costs are incurred, thereby making the process unacceptable economically. Also, the process has a problem in that it should be used to treat only livestock wastewater of a low contaminant concentration because it is necessary to carefully control microorganisms in accordance with the concentration of contaminants in livestock wastewater to be treated. Therefore, it is strongly required to develop a new method, which is capable of treating livestock wastewater of a high contaminant concentration while reducing the processing time.

Loess dispersion is the only conventional method for removing algae. In accordance with the loess dispersion method, loess is dispersed over the surface of water in which algae has been generated. However, it is known that the loess dispersion method has a low efficiency while causing bad effects such as disturbance of an aquatic ecosystem caused by blocking of sunlight. Hence, it is required to develop a safe new method having an excellent treatment effect without adversely affecting the water environment.

Therefore, the present invention has been made in view of the above problems, and it is an object of the present invention to provide an apparatus for generating microbubbles with positive charge for electroflotation, which has advantages in that it requires low treatment costs, and does not adversely affect the water environment.

It is another object of the present invention to provide a method for treating contaminated water by electroflotation to remove substances causing turbidity from contaminated water using the apparatus, which is capable of, for example, effectively removing inorganic particles and heavy metals where the contaminated water is industrial wastewater, effectively removing suspended organic substances to satisfy the water quality standard for effluents from public treatment facilities for livestock wastewater where the contaminated water is livestock wastewater, and effectively removing algae where the contaminated water is lake water or seawater where eutrophication proceeds.

In accordance with one aspect, the present invention provides an apparatus for generating microbubbles with a positive charge by electroflotation comprises: a reaction vessel filled with an aqueous solution which is wastewater to be treated; and at least one pair of thin metal plates arranged in the reaction vessel and supplied with a voltage externally, one of the thin metal plates in the pair serving as a cathode externally supplied with a negative potential and adapted to generate hydrogen gas in accordance with an electrolysis performed in the aqueous solution by the supplied voltage, the other thin plate in the pair serving as an anode externally supplied with a positive potential and adapted to elute positive charges therefrom, thereby positively charging the hydrogen gas generated at the cathode.

In the apparatus for generating microbubbles according to the present invention, the thin metal plates can be disposed horizontally or vertically. The surface area of each thin plate is determined based on the quality and quantity of contaminants to be removed.

Each thin metal plate may be made of a metal selected from a group consisting of aluminum, iron, copper, and stainless steel. Preferably, each metal plate is made of aluminum. It is unnecessary for the thin metal plates to be made of the same metal.

Current of 0.11 to 5.02 A may be applied to each metal plate at an external voltage of 6 to 48 V.

In accordance with another aspect, the present invention provides a method for treating contaminated water by electroflotation using the microbubble generating apparatus to remove substances causing turbidity from the contaminated water.

Where the contaminated water is industrial wastewater, turbidity-causing inorganic particles including titanium dioxide ($TiO_2$), calcium carbonate ($CaCO_3$), silica ($SiO_2$) and Talc, and heavy metals including nickel (Ni), copper (Cu), zinc (Zn), Cadmium (Cd), arsenic (As) and chrome (Cr) are removed from the contaminated water in accordance with the method. Where the industrial wastewater to be treated is distilled water containing no ion, or ionized water, one or more electrolytes selected from the group consisting of sodium chloride (NaCl), ammonium chloride ($NH_4Cl$), sodium nitrate ($NaNO_3$) and potassium chloride (KCl), which can be dissolved in water, may be added to the contaminated water in a quantity of 1 to 5,000 ppm. For the electrolytes according to the present invention, other electrolytes may be used which can be ionized.

Where the contaminated water is livestock wastewater, suspended organic substances causing turbidity, and total nitrogen and phosphorous causing eutrophicaton are simultaneously removed from the contaminated water in accordance with the method. In this case, the microbubble generating apparatus has a treatment time ranging from 6 minutes to a reaction time enough to remove the suspended organic substances causing turbidity up to a removal rate of 95 %.

It is undesirable that the reaction is continued even after a removal rate of 95% is obtained because it causes precipitations to be formed on the thin metal plates.

Preferably, the livestock wastewater to be treated is subjected to a solid-liquid separation process for removing corrosive materials prior to the treatment by the microbubble generating apparatus. In this case, it is possible to enhance the durability of the thin metal plates while more effectively generate microbubbles, thereby enhancing the removal efficiency of suspended organic substances.

Where the contaminated water is lake water or seawater, algae causing eutrophication is removed from the contaminated water in accordance with the method.

The removal of algae according to the present invention is carried out by floating algae in water to the water surface using positively-charged air bubbles. This method does not adversely affect the water treatment environment in terms of safety while exhibiting a superior removal efficiency over the conventional methods.

The above and other objects, features and other advantages of the present invention will be more clearly understood from the following detailed description taken in conjunction with the accompanying drawings, in which:

Fig. 1 is a schematic view of a microbubble generating apparatus according to an embodiment of the present invention, wherein thin metal plates are horizontally disposed; and

Fig. 2 is a schematic view of a microbubble generating apparatus according to another embodiment of the present invention, wherein thin metal plates are vertically disposed.

The apparatus for generating microbubbles according to the present invention will be described in more detail with reference to the annexed drawings.

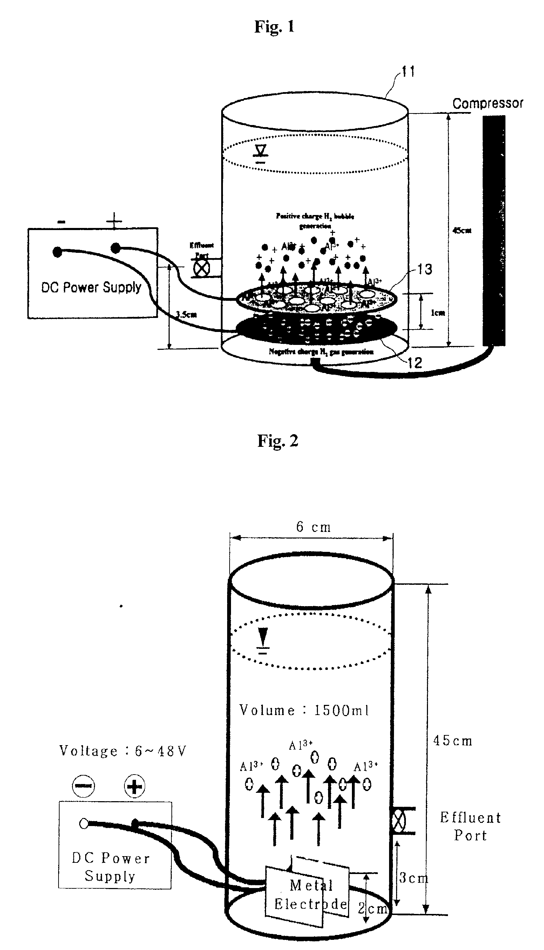

Fig 1 is a schematic view of a microbubble generating apparatus according to an embodiment of the present invention, wherein thin metal plates are horizontally disposed. As illustrated in Fig 1, the apparatus includes a reaction vessel 11 containing an aqueous solution, that is, raw contaminated water to be treated, and two thin metal plates 12 and 13 horizontally disposed in the reaction vessel 11 while being vertically spaced apart from each other. The distance of the thin metal plates 12 and 13 is preferably in a range of 6 to 10mm , but is not limited to this range. Although the lower thin metal plate 12 arranged near the bottom of the reaction vessel 11 has no hole, the upper thin metal plate 13 arranged above the lower thin metal plate 12 has holes having a diameter of 10mm and a hole interval of 10mm.

When a voltage of 6 to 48 V is applied between the thin metal plates 12 and 13 under the condition in which the lower thin metal plate 12 serves as a cathode, and the upper thin metal plate 13 serves as an anode, the aqueous solution electrolyzed. As a result, hydrogen gas is generated at the lower thin metal plate 12, whereas metals such as aluminum and iron are eluted at the upper thin metal plate 13.

The hydrogen gas generating reaction conducted at the lower thin metal plate 12, to which a negative potential is applied, is carried out as expressed by the following Formula 1:

[Formula 1]

$$4H_2O + 4e^- \rightarrow 2H_2(g) + 4OH^-(aq)$$

The reaction evolving metal ions is carried out as expressed by the following Formula 2.

[Formula 2]

$$Al(s) \rightarrow Al^{3+}(aq) + 3e^-$$

$$Fe(s) \rightarrow Fe^{3+}(aq) + 3e^-$$

The hydrogen gas generated at the lower thin metal plate 12 forms microbubbles in the aqueous solution. The microbubbles rise slowly, and agglomerate while passing through the holes of the upper thin metal plate 13. At this time, the agglomerated bubbles are positively charged by positive ions of metal such as aluminum eluted from the upper thin metal plate 13.

Although the thin metal plates 12 and 13 are horizontally arranged in the illustrated embodiment, the microbubble generating apparatus according to the present invention is not limited to such an arrangement. Alternatively, the thin metal plates may be vertically arranged, as illustrated in Fig 2. Also, formation conditions of the holes are selected depending on the reaction conditions. The surface areas of the thin metal plates are determined based on the quantity of turbidity-causing substances to be removed.

Now, examples of the present invention will be described in more detail. The following examples are described only for a better understanding of the present invention, and are not intended to limit the invention.

<Example 1: Variation in Elution Rate of Ions and Variation in Zeta Potential in Electroflotation Apparatus According to Reaction Time>

In one experiment, an aluminum thin plate was used as the anode of the electroflotation apparatus according to the present invention. To determine the production rate of aluminum ions evolved at the anode aluminum thin plate of the electroflotation apparatus, the concentration of aluminum ions in water varying with the lapse of time was measured at different current amounts under the condition in which different voltages of 6 V, 12 V, 24 V, 36 V, and 48 V were applied, respectively. The results are shown in Table 1. Samples were collected at a port arranged at a level of 35 mm from the bottom of the reaction vessel. The concentration of aluminum ions was measured by ICP. The zeta potential of microbubbles was also measured using a zeta potential analyzer. All measured zeta potentials of microbubbles were within a positive value range of 10.5 to 18.2 mV, regardless of the applied voltages.

Table 1

| Aluminum Ion Concentration | | | |
|---|---|---|---|
| Voltage (V) | Time (min) | | |
| | 10 | 20 | 30 |
| 6 (Current: 0.45A) | 2.5 | 5.0 | 5.1 |
| 12 (Current: 0.94A) | 5.0 | 6.0 | 6.7 |
| 24 (Current: 2.08A) | 6.6 | 7.5 | 7.8 |
| 36 (Current: 3.14A) | 8.5 | 9.6 | 9.5 |
| 48 (Current: 5.12A) | 11.0 | 13.0 | 12.9 |
| * Unit: ppm | | | |

In another experiment, an iron thin plate was used as the anode of the electroflotation apparatus according to the present invention. To determine the elution rate of iron ions eluted at the anode iron thin plate of the electroflotation apparatus, the concentration of iron ions in water varying with the lapse of time was measured at different current amounts under the condition in which different voltages of 6 V, 12 V, 24 V, 36 V, and 48 V were applied, respectively. The results are shown in Table 2. Although the current amount proposed in this Example is ranged from 0.45 A to 5.12A, the minimum current is not limited to 0.45A.

Table 2

| Iron Ion Concentration | | |
|---|---|---|
| Voltage | Iron Electrode plate | |
| | 10 min. | 20 min. |
| 6 | 2.8 | 5.0 |
| 12 | 5.5 | 6.3 |
| 24 | 7.0 | 7.4 |
| 36 | 8.8 | 9.1 |
| 48 | 11.5 | 12.5 |
| * Unit: ppm | | |

As shown in Tables 1 and 2, when aluminum (or iron) cations are eluted in a voltage-applied state, the elution rate and amount of $Al^{3+}$ (or $Fe^{3+}$) vary depending on the applied voltage. In particular, the elution rate decreases with the lapse of time. In the experiment using the iron thin plate, all measured zeta potentials of microbubbles were within a positive value range of 9.3 to 15.3 mV, regardless of the applied voltages.

By virtue of such aluminum (or iron) ions, hydrogen gas generated at the aluminum (or iron) thin plate is positively charged. This positively charged hydrogen gas forms positively charged microbubbles, so that it can be effectively utilized in water treatment processes in which raw water to be treated mainly contains negatively charged particles, for example, a process for purifying industrial wastewater containing negatively charged inorganic particles, a process for treating livestock wastewater containing negatively charged suspended organic particles, and a process for removing algae generated due to eutrophication.

On the other hand, hydroxide groups are generated from the cathode of the microbubble generating apparatus according to the present invention. Using these hydroxide groups, it is possible to precipitate heavy metals for removal thereof. So, contaminant materials, such as heavy metals, algae and like, in industrial wastewater, livestock wastewater, lake water and sea water can be removed using the microbubble generating apparatus for electroflotation according to the present invention.

<Example 2: Removal Efficiency of Inorganic Particles in Industrial Wastewater by Electroflotation Process >

To determine the applicability of the electroflotation process according to the invention, which uses positively charged microbubbles generated by the microbubble generating apparatus of the present invention, to removal of inorganic particles such as titanium dioxide, calcium carbonate, silica, and talc in industrial wastewater, an experiment was performed to measure respective turbidity removal rates in various raw water samples, that, is, industrial water, distilled water, sodium chloride-added distilled water samples of different concentrations, sodium chloride-added ionized water samples of different concentrations, ammonium chloride-added distilled water samples of different concentrations, sodium nitrate-added distilled water samples of different concentrations, and potassium chloride-added distilled water samples of different concentrations. The results are shown in Table 3 to Table 6.

Table 3

| Evaluation | Industrial Water | Distilled Water | Sodium Chloride-Added Distilled Water (ppm) | | | | Ammonium Chloride-Added Distilled Water (ppm) | | | | Sodium Nitrate-Added Distilled Water (ppm) | | | |
|---|---|---|---|---|---|---|---|---|---|---|---|---|---|---|
| | | | 300 | 1000 | 5000 | 7000 | 300 | 1000 | 5000 | 7000 | 300 | 1000 | 5000 | 7000 |
| Initial Turbidity (NTU) | 705 | 700 | 705 | 705 | 705 | 703 | 701 | 700 | 700 | 701 | 701 | 703 | 701 | 700 |
| Terminal Turbidity (NTU) | 53 | 690 | 5.0 | 20.0 | 550 | 363 | 101 | 251 | 75 | 353 | 90 | 24.3 | 80 | 324 |
| Removal Rate(%) | 92.5 | 14 | 993 | 972 | 92.2 | 48.4 | 98.6 | 964 | 893 | 496 | 98.7 | 96.5 | 88.6 | 53.7 |
| Overall Evaluation | ◎ | × | ◎ | ◎ | ◎ | Δ | ◎ | ◎ | ○ | Δ | ◎ | ◎ | ○ | Δ |

\* Inorganic particles: titanium dioxide

\* Solvent: distilled water, Voltage: 36V, Unit of added quantity of electrolyte: ppm, Reaction time: 30 minutes

◎ : excellent (removal rate: more than 90%)

○: good (removal rate: 81~90%) Δ: average (removal rate: 41~80%)

×: poor (removal rate: less than 40%)

Table 4

| Evaluation | Industrial Water | Distilled Water | Sodium Chloride-Added Ionized Water(ppm) | | | | Ammonium Chloride-Added Distilled Water(ppm) | | | | Potassium Chloride-Added Distilled Water(ppm) | | | |
|---|---|---|---|---|---|---|---|---|---|---|---|---|---|---|
| | | | 300 | 1000 | 5000 | 7000 | 300 | 1000 | 5000 | 7000 | 300 | 1000 | 5000 | 7000 |
| Initial Turbidity (NTU) | 700 | 700 | 701 | 703 | 705 | 702 | 700 | 704 | 707 | 700 | 702 | 706 | 703 | 701 |
| Final Turbidity (NTU) | 65 | 693 | 4.8 | 25.0 | 51.0 | 386 | 123 | 277 | 82 | 335 | 5.5 | 213 | 66 | 345 |
| Removal Rate(%) | 90.7 | 1.0 | 99.3 | 96.4 | 92.8 | 45.0 | 98.2 | 96.1 | 88.4 | 52.1 | 99.2 | 97.0 | 90.6 | 50.8 |
| Overall Evaluation | ◎ | × | ◎ | ◎ | ◎ | Δ | ◎ | ◎ | ○ | Δ | ◎ | ◎ | ◎ | Δ |

* Inorganic particles: calcium carbonate
* Solvent: distilled water, Voltage: 36V, Unit of added quantity of electrolyte: ppm, Reaction time: 30 minutes
◎ : excellent (removal rate: more than 90%)
○: good (removal rate: 81~90%)
Δ: average (removal rate: 41~80%)
×: poor (removal rate: less than 40%)

Table 5

| Evaluation | Industrial Water | Distilled Water | Sodium Chloride-Added Distilled Water (ppm) | | | | Ammonium Chloride-Added Distilled Water (ppm) | | | | Sodium Nitrate-Added Distilled Water (ppm) | | | |
|---|---|---|---|---|---|---|---|---|---|---|---|---|---|---|
| | | | 300 | 1000 | 5000 | 7000 | 300 | 1000 | 5000 | 7000 | 300 | 1000 | 5000 | 7000 |
| Initial Turbidity (NTU) | 702 | 706 | 703 | 702 | 701 | 708 | 703 | 702 | 700 | 701 | 702 | 703 | 702 | 703 |
| Final Turbidity (NTU) | 76 | 672 | 4.9 | 23.2 | 554 | 345 | 9.3 | 223 | 80 | 355 | 10.6 | 373 | 76 | 347 |
| Removal Rate(%) | 89.2 | 4.8 | 99.3 | 967 | 921 | 51.3 | 987 | 96.8 | 886 | 49.4 | 985 | 94.7 | 892 | 506 |
| Overall Evaluation | ○ | × | ◎ | ◎ | ◎ | Δ | ◎ | ◎ | ○ | Δ | ◎ | ◎ | ○ | Δ |

* Inorganic particles: silica
* Solvent: distilled water, Voltage: 36V, Unit of added quantity of electrolyte: ppm, Reaction time: 30 minutes
◎ : excellent (removal rate: more than 90%)
○: good (removal rate: 81~90%)
Δ: average (removal rate: 41~80%)
×: poor (removal rate: less than 40%)

EP 1 266 866 A1

Table 6

| Evaluation | Industrial Water | Distilled Water | Sodium Chloride-Added Ionized Water (ppm) | | | | Ammonium Chloride-Added Distilled Watei (ppm) | | | | Potassium Chloride-Added Distilled Water (ppm) | | | |
|---|---|---|---|---|---|---|---|---|---|---|---|---|---|---|
| | | | 300 | 1000 | 5000 | 7000 | 300 | 1000 | 5000 | 7000 | 300 | 1000 | 5000 | 7000 |
| Initial Turbidity (NTU) | 705 | 702 | 701 | 702 | 707 | 703 | 702 | 703 | 701 | 701 | 704 | 700 | 700 | 704 |
| Final Turbidity (NTU) | 63 | 634 | 79 | 230 | 47.4 | 311 | 6.2 | 21.0 | 67 | 334 | 6.7 | 42.1 | 55 | 387 |
| Removal Rate(%) | 91.1 | 9.7 | 989 | 96.7 | 93.3 | 558 | 99.1 | 970 | 904 | 524 | 991 | 94.0 | 92.1 | 45.0 |
| Overall Evaluation | ◎ | × | ◎ | ◎ | ◎ | Δ | ◎ | ◎ | ◎ | Δ | ◎ | ◎ | ◎ | Δ |

* Inorganic particles: talc
* Solvent: distilled water, Voltage: 36V, Unit of added quantity of electrolyte: ppm, Reaction time: 30 minutes
◎ : excellent (removal rate: more than 90%)
○: good (removal rate: 80~90%)
Δ: average (removal rate: 41~80%)
×: poor (removal rate: less than 90%)

**EP 1 266 866 A1**

All raw water samples used in the experiment had a turbidity of near 700 NTU. Referring to Table 3 to table 6, it can be seen that in the case of distilled water, the resulting removal rate is less than 10%, and inorganic particles contained in industrial wastewater such as titanium dioxide, calcium carbonate, silica, and talc, are hardly removed. In the case of industrial water, the resulting removal rate was more than 89%. In the case of distilled water added with sodium chloride, ammonium chloride, sodium nitrate, and potassium chloride in a concentration of 5,000 ppm or less, a good removal rate of 88% or more was obtained. On the other hand, although there is a slight variation in removal rate depending on the concentration of the electrolyte, the removal rate decreases sharply at an electrolyte concentration of 7,000 ppm or more because bubbles are generated in an excessive amount. Accordingly, it is desirable to use an electrolyte concentration of less than 7,000 ppm.

<Example 3: Removal Efficiency of Heavy Metals in Industrial Wastewater According to Voltage Variation >

In treatment of industrial wastewater using the electroflotation apparatus according to the present invention, a variation in the removal efficiency of heavy metals depending on a variation in applied voltage was measured. The results are shown in the following Table 7, together with the results of a coagulation-sedimentation. In more detail, Table 7 shows the results of treatment according to the present invention and the coagulation-sedimentation to compare the removal effects of the two methods. In the treatment according to the present invention performed using the microbubble generating apparatus of the present invention, voltages of 6, 12, 24, 36 and 48V were applied, respectively. Respective contents of heavy metals were measured using ICP in accordance with the present invention.

Table 7

| Evaluation | | | Electroflotation | | | | | Coagulation-Sedimentation |
|---|---|---|---|---|---|---|---|---|
| | | | Voltage (V) | | | | | |
| Heavy Metals | | | 6 | 12 | 24 | 36 | 48 | - |
| Ni* | Before Treatment | | 25 | 25 | 25 | 25 | 25 | 25 |
| | After Treatment | (ppm) | 6.1 | 3.9 | 0.5 | 0.43 | 0.44 | 67 |
| | Removal Rate (%) | | 75.6 | 84.4 | 98.0 | 98.3 | 98.2 | 73.2 |
| Cu* | Before Treatment | | 25 | 25 | 25 | 25 | 25 | 25 |
| | After Treatment | (ppm) | 8.9 | 4.2 | 0.7 | 0.45 | 0.39 | 10 |
| | Removal Rate (%) | | 64.4 | 83.2 | 972 | 98.2 | 98.4 | 60.0 |
| Zn* | Before Treatment | | 25 | 25 | 25 | 25 | 25 | 25 |
| | After Treatment | (ppm) | 8 | 3.6 | 0.6 | 0.31 | 0.4 | 9.5 |
| | Removal Rate (%) | | 68 | 85.6 | 97.6 | 98.8 | 98.4 | 62.0 |
| Cd** | Before Treatment | | 25 | 25 | 25 | 25 | 25 | 25 |
| | After Treatment | (ppm) | 9.2 | 4.1 | 0.45 | 0.26 | 0.36 | 8.9 |
| | Removal Rate (%) | | 63.2 | 83.6 | 98.2 | 99.0 | 98.6 | 64.4 |
| As** | Before Treatment | | 1.2 | 1.2 | 1.2 | 1.2 | 1.2 | 1.2 |
| | After Treatment | (ppm) | 0.2 | 0.098 | 0.012 | 0.008 | 0.009 | 0.24 |
| | Removal Rate (%) | | 833 | 918 | 990 | 99.3 | 99.3 | 80.0 |
| | Before Treatment | | 25 | 25 | 25 | 25 | 25 | 25 |

Treatment Time: 40 minutes (Electroflotation), 4.5 hours (Coagulation-Sedimentation)
*: Aluminum electrode plate (Anode)
**: Iron electrode plate (Anode)

Table 7 (continued)

| Evaluation | | | Electroflotation | | | | | Coagulation-Sedimentation |
|---|---|---|---|---|---|---|---|---|
| | | | Voltage (V) | | | | | |
| Heavy Metals | | | 6 | 12 | 24 | 36 | 48 | - |
| Cr** | After Treatment | (ppm) | 10.2 | 33 | 0.51 | 0.6 | 0.54 | 9 |
| | Removal Rate (%) | | 59.2 | 86.8 | 98.0 | 97.6 | 97.8 | 64.0 |

**: Iron electrode plate (Anode)

As shown in Table 7, the electroflotation performed using the microbubble generating apparatus of the present invention exhibits an excellent heavy metal removal efficiency, as compared to the coagulation-sedimentation. When the applied voltage was 12V or more, a heavy metal removal efficiency of 80% or more was obtained. When the applied voltage was ranged from 24 to 48V, an excellent heavy metal removal efficiency of 97% or more was obtained. Meanwhile, it can be seen that a good removal efficiency of arsenic(As) and chrome(Cr) is obtained where an iron thin plate is used as an anode.

<Example 4: Removal Efficiency of Turbidity-causing substances in Livestock wastewater According to Voltage Variation >

In treatment of livestock wastewater using the electroflotation apparatus according to the present invention, a variation in the removal efficiency of suspended organic substances in livestock wastewater depending on a variation in applied voltage was measured. The results are shown in the following Table 8, together with the results of an aerobic microbiology method. In more detail, Table 8 shows the results of treatment according to the present invention where voltages of 6, 12, 24, 36 and 48V are applied to the microbubble generating apparatus of the present invention, respectively, together with the results of decomposition treatment by the aerobic microbiology method for 5 days, in order to compare the removal effects of the two methods.

Table 8

| | Electroflotation | | | | | | | | | Microbiology Method |
|---|---|---|---|---|---|---|---|---|---|---|
| | Voltage (V) | | | | | | | | | Aerobic Reaction |
| | 6* | 12* | 24* | 36* | 36* | 48* | 48* | 36** | 48** | - |
| Initial Turbidity (NTU) | 700 | 703 | 700 | 705 | 2510 | 701 | 3605 | 703 | 702 | 705 |
| Final Turbidity (NTU) | 450 | 215 | 106 | 34 | 59 | 85 | 73 | 106 | 58 | 355 |
| Removal Rate (%) | 35.7 | 69.4 | 84.9 | 95.2 | 97.7 | 98.8 | 98.0 | 84.9 | 91.7 | 49.6 |

Treatment Time: 10 minutes (Electroflotation), 5 days (Microbiology method)

*: Aluminum electrode plate (Anode)

**: Iron electrode plate (Anode)

As shown in Table 8, the electroflotation performed using the microbubble generating apparatus of the present invention exhibits an excellent suspended organic substance removal efficiency, as compared to the aerobic microbiology method. At an initial reaction step of electroflotation (treatment time: 10 minutes), the turbidity removal efficiency was proportional to the voltage difference. As a result, it can be seen that in case there are a large amount of aluminum or iron cations generated in the reaction vessel, hydrogen gas generated in the reaction vessel can be more effectively charged with positive charges, so that a reduction in reaction time can be achieved.

Also, total nitrogen and phosphorous contents were measured to determine removal of nitrate and phosphorous from livestock wastewater when the wastewater was treated by the electroflotation performed using positively-charged microbubbles generated from the microbubble generating apparatus according to the present invention. For this measurement, the wastewater was treated at a voltage of 48 V for 10 minutes using an aluminum or iron thin plate as an anode. The results are summarized in the following Table 9.

Table 9

| Evaluation | Aluminum Electrode Plate (Anode) | | Iron Electrode Plate (Anode) | |
|---|---|---|---|---|
| | Total Phosphate (T-P) | Total Nitrogen (T-N) | Total Phosphate (T-P) | Total Nitrogen (T-N) |
| Before Treatment | 114.2 | 682.0 | 114.2 | 682.0 |
| After Treatment | 5.3 | 25.0 | 7.6 | 37.0 |
| Removal Rate (%) | 95.4 | 963 | 93.4 | 94.6 |

As shown in Table 9, the results of treatment of livestock wastewater by the electroflotation show that an excellent nitrate and phosphorous removal efficiency of 93% or more is obtained irrespective of whether the electrode plate is made of aluminum or iron.

<Example 5: Removal Efficiency of Algae in Lake Water and Seawater According to Voltage Variation >

In treatment of lake water and seawater using the electroflotation apparatus according to the present invention, variation in the removal efficiency of algae in lake water and seawater depending on a variation in applied voltage was measured. The results are shown in the following Table 10, together with the results of a loess dispersion method. In more detail, Table 10 shows the results of treatment according to the present invention where voltages of 6, 12, 24, 36 and 48V are applied to the microbubble generating apparatus of the present invention, respectively, together with the results of decomposition treatment by the loess dispersion method for 40 minutes, in order to compare the removal effects of the two methods.

Table 10

| | Electroflotation | | | | | Loess dispersion | |
|---|---|---|---|---|---|---|---|
| | 6V | 12V | 24V | 36V | 48V | Lake water | Sea water |
| Before treatment | | | | 179 | | | |
| After treatment (mg/m$^3$) | 34.9 | 28.9 | 20.4 | 9.6 | 1.4 | 140.3 | 122.2 |
| Removal rate (%) | 80.5 | 83.9 | 88.6 | 94.6 | 99.2 | 21.6 | 31.7 |
| Treatment Time: 40 minutes (Electroflotation and loess dispersion) Electrodes: aluminum thin metal plates (Cathode and anode) | | | | | | | |

As shown in Table 10, the results of treatment of lake water and seawater by the electroflotation show that the electroflotation method of the present invention has an excellent algae removal efficiency of 80% or more, as compared to the loess dispersion method, exhibiting a removal efficiency of 32% or less.

As apparent from the above description, the present invention provides an apparatus for generating microbubbles with positive charge for electroflotation and a method for treating contaminated water by electroflotation using the positively-charged microbubbles generated from the microbubble generating apparatus, thereby removing turbidity-causing substances from the contaminated water.

In case the contaminated water is industrial wastewater, inorganic particles such as titanium dioxide ($TiO_2$), calcium carbonate ($CaCO_3$), silica ($SiO_2$) and Talc, and heavy metals such as nickel (Ni), copper (Cu), zinc (Zn), Cadmium (Cd), arsenic (As) and chrome (Cr) can be effectively removed by the treatment method using electroflotation according to the present invention. Particularly, in case the contaminated water is distilled water containing no ions, or ionized water, negatively-charged inorganic particles causing turbidity can be effectively removed by using an electrolyte such as sodium chloride (NaCl), ammonium chloride ($NH_4Cl$), sodium nitrate ($NaNO_3$) or potassium chloride (KCl) in a concentration of 1 to 5,000 ppm.

Also, in case the contaminated water is livestock wastewater, negatively-charged organic particles causing turbidity and total nitrogen and phosphorous causing eutrophication can be effectively removed to satisfy water quality standards for effluents from public treatment facilities for livestock wastewater by the method using electroflotation according to the present invention, without using any electrolyte. Additionally, in case the contaminated water is lake water or seawater, algae can be effectively removed.

The contaminated water treatment method by electroflotation according to the present invention does not require any separate air injection apparatus or any surface adsorbent to remove negatively-charged turbidity-causing substances because hydrogen gas generated by electrolysis is positively charged by metal cations evolved in the electrolysis.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An apparatus for generating microbubbles with a positive charge by electroflotation comprises:

   a reaction vessel filled with an aqueous solution which is wastewater to be treated; and
   at least one pair of thin metal plates arranged in the reaction vessel and supplied with a voltage externally, one of the thin metal plates in the pair serving as a cathode externally supplied with a negative potential and adapted to generate hydrogen gas in accordance with an electrolysis performed in the aqueous solution by the supplied voltage, the other thin plate in the pair serving as an anode externally supplied with a positive potential and adapted to elute positive charges therefrom, thereby positively charging the hydrogen gas generated at the cathode.

2. The apparatus according to claim 1, wherein each of the thin metal plates is made of a metal selected from a group consisting of aluminum, iron, copper, and stainless steel.

3. The apparatus according to claims 1 or 2, wherein current of 0.11 to 5.02 A is supplied to the thin metal plate at an external voltage of 6 to 48V.

4. A method for treating contaminated water by electroflotation using a microbubble generating apparatus as claimed in any of claims 1 to 3 to remove substances causing turbidity from the contaminated water.

5. The method according to claim 4, wherein turbidity-causing inorganic particles including titanium dioxide ($TiO_2$), calcium carbonate ($CaCO_3$), silica ($SiO_2$) and Talc, and heavy metals including nickel (Ni), copper (Cu), zinc (Zn), Cadmium (Cd), arsenic (As) and chrome (Cr) are removed from the contaminated water where the contaminated water is industrial wastewater.

6. The method according to claim 4, wherein suspended organic substances causing turbidity, and total nitrogen and phosphorous causing eutrophicaton are simultaneously removed from the contaminated water where the contaminated water is livestock wastewater.

7. The method according to claim 4, wherein algae causing eutrophication is removed from the contaminated water where the contaminated water is lake water or seawater.

8. The method according to claim 6, wherein the microbubble generating apparatus has a treatment time ranging from 6 minutes to a reaction time enough to remove the suspended organic substances causing turbidity up to a removal rate of 95 %.

**Fig. 1**

**Fig. 2**

**EP 1 266 866 A1**

European Patent Office

**EUROPEAN SEARCH REPORT**

Application Number

EP 02 25 4083

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 100 04 045 A (MASSTEC GMBH) 15 March 2001 (2001-03-15) * the whole document * | 1,2,4-6, 8 | C02F1/465 |
| X | US 3 523 891 A (MEHL RONALD C) 11 August 1970 (1970-08-11) * the whole document * | 1-4 | |
| X | FR 2 126 359 A (MITSUI MINING & SMELTING CO) 6 October 1972 (1972-10-06) * the whole document * | 1,2,4,5 | |
| A | | 3,8 | |
| X | WO 98 46531 A (AUSTRALIAN WATER PURIFICATION ;YANG THIEN SIUNG (AU)) 22 October 1998 (1998-10-22) * the whole document * | 1-4,7 | |
| X | US 3 510 001 A (XYLANDER KURT ET AL) 5 May 1970 (1970-05-05) * the whole document * | 1,4,5 | |
| X | POELMAN E ET AL: "Potential of electrolytic flocculation for recovery of micro-algae" RESOURCES CONSERVATION AND RECYCLING, ELSEVIER SCIENCE PUBLISHER, AMSTERDAM, NL, vol. 19, no. 1, 1997, pages 1-10, XP004015353 ISSN: 0921-3449 * the whole document * | 1,2,4,6, 7 | |
| A | | 8 | |

|  |  |  |
|---|---|---|
|  |  | TECHNICAL FIELDS SEARCHED (Int.Cl.7) |
|  |  | C02F |

The present search report has been drawn up for all claims

| Place of search | Date of completion of the search | Examiner |
|---|---|---|
| THE HAGUE | 18 September 2002 | Devisme, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

15

**ANNEX TO THE EUROPEAN SEARCH REPORT
ON EUROPEAN PATENT APPLICATION NO.**

EP 02 25 4083

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2002

| Patent document cited in search report | | Publication date | Patent family member(s) | | Publication date |
|---|---|---|---|---|---|
| DE 10004045 | A | 15-03-2001 | WO | 0117911 A1 | 15-03-2001 |
| | | | DE | 10004045 A1 | 15-03-2001 |
| | | | AU | 7901700 A | 10-04-2001 |
| | | | WO | 0117912 A1 | 15-03-2001 |
| | | | EP | 1218298 A1 | 03-07-2002 |
| | | | AU | 1030500 A | 10-04-2001 |
| US 3523891 | A | 11-08-1970 | NONE | | |
| FR 2126359 | A | 06-10-1972 | JP | 51033872 B | 22-09-1976 |
| | | | CA | 958373 A1 | 26-11-1974 |
| | | | DE | 2208076 A1 | 14-09-1972 |
| | | | FR | 2126359 A5 | 06-10-1972 |
| | | | GB | 1372465 A | 30-10-1974 |
| | | | SU | 497759 A3 | 30-12-1975 |
| | | | US | 3783114 A | 01-01-1974 |
| WO 9846531 | A | 22-10-1998 | AU | 6188598 A | 22-10-1998 |
| | | | AU | 6814298 A | 11-11-1998 |
| | | | WO | 9846531 A1 | 22-10-1998 |
| | | | ZA | 9803126 A | 21-10-1998 |
| US 3510001 | A | 05-05-1970 | NONE | | |

EPO FORM P0459

For more details about this annex : see Official Journal of the European Patent Office, No. 12/82